# EUROPÄISCHE PATENTANMELDUNG

(11) **EP 2 957 529 A1**
(43) Veröffentlichungstag der Anmeldung: **23.12.2015**
(21) Anmeldenummer: 15001750.7
(22) Anmeldetag: 15.06.2015
(51) Int. Cl.: B65G 11/16

(54) **VERSCHLEISSSCHUTZEINHEIT**

(30) Priorität: 19.06.2014 DE 202014004910 U
(71) Anmelder: Fritz, Norbert, 06118 Halle (DE)
(72) Erfinder: Fritz, Norbert, 06118 Halle (DE)
(74) Vertreter: Weihrauch, Frank

(57) **Zusammenfassung**

Die Erfindung betrifft eine Verschleißschutzeinheit, aufweisend eine Mehrzahl Verschleißschutzelemente (1), welche mindestens eine Verschleißschutzebene (2) ausbilden, und aufweisend eine Mehrzahl farbiger Markierungselemente (3), welche mindestens eine Markierungsebene (4) ausbilden, wobei die mindestens eine Markierungsebene (4) von mindestens einer Verschleißschutzebene (2) überdeckt wird, und aufweisend Verbindungsmittel (5), durch welche die Verschleißschutzelemente (1) und die Markierungselemente (3) in einer Lagebeziehung zueinander festgelegt sind.

## Beschreibung

Die Erfindung betrifft eine Verschleißschutzeinheit, insbesondere für Förderanlagen zur Förderung abrasiven Materials.

Der vorliegenden Erfindung liegt das generelle Problem zugrunde, dass Förderanlagen, wie sie beispielsweise in der Bergbauindustrie zur Anwendung kommen, einem hohen Verschleiß durch zu förderndes, abrasiv wirkendes Material ausgesetzt sind.

Aus dem Stand der Technik sind bereits Lösungen bekannt, welche die Anordnung von Verschleißschutzelementen zum Schutz entsprechender Unterkonstruktionen vorsehen.

Derartige Verschleißschutzelemente sind in der Regel als ein- oder mehrstückige, plattenförmige Elemente ausgebildet, welche, beispielsweise mittels Verschrauben, auf der Oberfläche der zu schützenden Unterkonstruktion angebracht werden.

Der Nachteil bekannter Verschleißschutzelemente besteht insbesondere darin, dass bei einem Versagen der Verschleißschutzelemente üblicherweise unmittelbar die darunterliegende Oberfläche der zu schützenden Unterkonstruktion freigelegt wird und durch das zu fördernde Material beschädigt werden kann.

Um eine solche Beschädigung der Unterkonstruktion zu vermeiden sind bei derartigen Lösungen regelmäßige Kontrollen der Verschleißschutzelemente, beispielsweise mittels Messen deren verbleibender Reststärke, notwendig, wodurch jedoch entsprechende Kosten für die durchzuführenden Überprüfungen entstehen.

Die Aufgabe der vorliegenden Erfindung besteht somit darin, eine Lösung für eine Verschleißschutzeinheit aufzuzeigen, welche eine unkomplizierte Kontrolle eines Verschleißgrades ermöglicht und welche zudem kostengünstig bereitstellbar ist.

Die Aufgabe wird durch die im Patentanspruch 1 aufgeführten Merkmale gelöst. Bevorzugte Weiterbildungen ergeben sich aus den Unteransprüchen.

Eine erfindungsgemäße Verschleißschutzeinheit weist eine Mehrzahl Verschleißschutzelemente auf, welche mindestens eine Verschleißschutzebene ausbilden. Die Verschleißschutzelemente bestehen vorliegend aus einem verschleißfesten Material, beispielsweise Keramik Stahl, Gummi, Polyurethan oder Keramik und sind innerhalb der mindestens einen Verschleißschutzebene insbesondere nebeneinanderliegend angeordnet.

Speziell die Verwendung von Keramikmaterial ermöglicht die Bereitstellung besonders abriebfester Verschleißschutzelemente, welche gleichzeitig ein geringes Eigengewicht aufweisen.

Darüber hinaus weist die erfindungsgemäße Verschleißschutzeinheit eine Mehrzahl farbiger Markierungselemente auf, welche mindestens eine Markierungsebene ausbilden, wobei die Markierungsebene von mindestens einer Verschleißschutzebene überdeckt wird. Die Markierungselemente sind vorzugsweise mit einer Signalfarbe versehen, welche eine besonders gute Unterscheidung der Markierungselemente von den Verschleißschutzelementen ermöglicht. Die Markierungselemente können beispielsweise als durchgefärbte Kunststoffkörper ausgebildet sein. Die Geometrie der Markierungselemente kann insbesondere der Geometrie der Verschleißschutzelemente entsprechen. Die Markierungsebene muss dabei nicht ausschließlich durch Markierungselemente gebildet werden. Vielmehr können in der Markierungsebene auch Verschleißschutzelemente angeordnet sein, so dass beispielsweise nur an jeder fünften Position ein Markierungselment angeordnet ist.

Die Verschleißschutzelemente und die Markierungselemente werden ferner durch Verbindungsmittel in einer Lagebeziehung zueinander festgelegt.

Hierbei werden die Verschleißschutzelemente und die Markierungselemente, wie obenstehend aufgeführt, übereinanderliegend durch die Verbindungsmittel verbunden, wobei die Verbindungsmittel beispielsweise durch Schrauben oder klebende Elemente gebildet werden.

Die Verschleißschutzeinheit ist vorzugsweise mittels entsprechender Befestigungsmittel auf einer zu schützenden Unterkonstruktion anordenbar, wobei die Anordnung insbesondere derart erfolgt, dass die Verschleißschutzelemente die außenliegende Oberfläche der Unterkonstruktion bilden, welche, beispielsweise bei Förderanlagen, mit einem abrasiv wirkenden Fördermaterial in Kontakt kommt.

Der mehrschichtige Aufbau der erfindungsgemäßen Verschleißschutzeinheit bietet insbesondere den technologischen Vorteil, dass bei einem Erreichen eines bestimmten Abnutzungsgrades oder einer Beschädigung der Verschleißschutzelemente die darunterliegenden Markierungselemente sichtbar werden und auf diese Weise, zum Beispiel bei einer optischen Kontrolle der Verschleißschutzeinheit, defekte Bereiche unmittelbar und deutlich erkennbar sind und die Verschleißschutzeinheit oder Teile dieser rechtzeitig ausgewechselt werden können.

Zudem ermöglicht der erfindungsgemäße Aufbau der Verschleißschutzeinheit, dass verschlissene oder beschädigte Verschleißschutzelemente einzeln auswechselbar sind. Auf diese Weise können insbesondere anfallende Instandhaltungskosten für die Verschleißschutzeinheit niedrig gehalten werden.

In einer bevorzugten Weiterbildung der erfindungsgemäßen Verschleißschutzeinheit sind die Markierungselemente als Verschleißschutzelemente ausgebildet und insbesondere so innerhalb der Verschleißschutzeinheit angeordnet, dass diese ebenfalls eine Verschleißschutzebene ausbilden.

Vorzugsweise kommen hierbei als Markierungselemente die im Anspruch 1 aufgeführten Verschleißschutzelemente zur Anwendung, wobei diese durch geeignete Marterialswahl abschnittsweise oder vollständig eingefärbt vorliegen.

Ein besonderer Vorteil der Ausbildung der Markierungselemente als Verschleißschutzelemente besteht darin, dass die Langzeitverwendbarkeit der Verschleißschutzeinheit erhöht wird, da neben der mindestens einen Verschleißschutzebene, welche durch die Verschleißschutzelemente gebildet wird, mindestens eine weitere Verschleißschutzebene bereitgestellt wird, welche durch die Markierungselemente gebildet wird.

Zudem ist es bei der hier beschriebenen Variante der Verschleißschutzeinheit besonders vorteilhaft möglich, nur einen Teil der Markierungselemente innerhalb der jeweiligen Markierungsebene einzufärben, sodass sich beispielsweise eine linienförmige Anordnung der farbigen Markierungselemente ergibt. Die übrigen Positionen sind durch Verschleißschutzelemente belegt.

Eine solche Ausführung bietet insbesondere bei der Anwendung von Keramikmaterial für die Markierungselemente den Vorteil, die Kosten für die benötigten Markierungselemente niedrig gehalten werden können.

Eine besonders vorteilhafte Variante der erfindungsgemäßen Verschleißschutzeinheit sieht vor, dass die Verschleißschutzelemente derart in dem Aufnahmebereich angeordnet sind, dass diese mehrere, übereinanderliegende Verschleißschutzebenen ausbilden.

Auf diese Weise können insbesondere die Widerstandsfähigkeit und die Langzeitverwendbarkeit der Verschleißschutzeinheit verbessert werden.

Die Verschleißschutzelemente können in diesem Fall in jeder Verschleißschutzebene identisch ausgebildet sein oder je nach Verschleißschutzebene unterschiedliche Geometrien aufweisen.

Zudem können jeweils übereinanderliegende Verschleißschutzelemente deckungsgleich ausgebildet und deckungsgleich angeordnet sein.

In einer weiteren vorteilhaften Variante der Verschleißschutzeinheit sind die Markierungselemente derart zueinander angeordnet, dass diese mehrere, übereinanderliegende Markierungsebenen ausbilden.

Eine solche Anordnung der Markierungselemente ermöglicht als besonderen Vorteil einen mehrstufigen Aufbau der Markierungsebenen. Hierbei können beispielsweise zwei Markierungsebenen übereinanderliegen, wobei die obenliegende Markierungsebene grüne Markierungselemente und die darunterliegende Markierungsebene rote Markierungselemente aufweist. Je nach Abnutzungsgrad der Verschleißschutzeinheit werden somit entweder grüne oder rote Markierungselemente freigelegt.

Eine solche Ausführungsform der Verschleißschutzeinheit ermöglicht insbesondere eine bessere Abschätzung des Abnutzungsgrades und demzufolge eine bessere Planbarkeit eines notwendig werdenden Austauschs.

Unterhalb der mindestens einen Markierungsebene ist gemäß einer bevorzugten Weiterbildung der Erfindung eine weitere Verschleißschutzebene angeordnet.

Durch die Ausbildung einer zusätzlichen Verschleißschutzebene unterhalb der mindestens einen Markierungsebene wird eine zusätzliche Sicherheitsebene geschaffen, welche auch bei einer verspäteten oder nicht erfolgten Erkennung einer zu großen Abnutzung oder Beschädigung der Markierungselemente eine Beschädigung der zu schützenden Unterkonstruktion durch abrasives Material verhindert oder eine ausreichenden zeitlichen Vorlauf für eine Reparatur sicherstellt.

Eine besonders vorteilhafte Variante der erfindungsgemäßen Verschleißschutzeinheit sieht ferner vor, dass die Verbindungsmittel durch eine Vergussmasse, beispielsweise aus Polyurethan, bereitgestellt werden.

Die Vergussmasse wird hierbei, nach einer erfolgten Vorpositionierung und Ausrichtung der Verschleiß- und Markierungselemente zueinander, so in die sich zwischen den Elementen einstellenden Zwischenräume eingebracht, dass die Markierungselemente vollständig und die Verschleißelemente an deren Unterseiten und optional an deren Seitenflächen von der Vergussmasse umschlossen werden.

Bei einer Anordnung mehrerer, übereinanderliegender Verschleißschutzebenen werden die Verschleißschutzelemente der obersten Verschleißschutzebene nur an deren Unterseiten und Seitenflächen von der Vergussmasse umschlossen, während die Verschleißschutzelemente der darunterliegenden Verschleißschutzebenen vollständig von der Vergussmasse umschlossen werden.

Die Vergussmasse ermöglicht als besonderen Vorteil eine großflächige und somit besonders sichere Verbindung zwischen den Verschleiß- und Markierungselementen wobei je nach Wahl des Materials der Vergussmasse ein elastischer Verbund der Elemente bereitstellbar ist, welcher eine optimale Anpassbarkeit der Verschleißschutzeinheit an eine zu schützende Unterkonstruktion ermöglicht. Ein weiterer Vorteil besteht darin, dass ein Elastizitätsgrad der Vergussmasse so eingestellt werden kann, dass eine optimale Verteilung und ein optimaler Abbau von Kräften bei Impaktereignissen gemäß den konkreten Nutzungsanforderungen bereitstellbar ist.

Insbesondere bei einer Ausbildung der Verbindungsmittel als Vergussmasse und einer Anordnung der Verschleißschutzelemente und/oder der Markierungselemente in mehreren, übereinanderliegenden Ebenen, sind die übereinanderliegenden Verschleißschutzelemente und/oder Markierungselemente vorzugsweise deckungsgleich ausgebildet. Hierdurch ergibt sich der Vorteil, dass die Vergussmasse besonders gut in vorhandene Zwischenräume zwischen den Verschleißschutzelementen eingebracht und so ein besonders stabiler Verbund bereitgestellt werden kann.

Die Montage der erfindungsgemäßen Verschleißschutzeinheit kann in diesem Fall beispielsweise auch derart erfolgen, dass zuerst die übereinanderliegenden Verschleißschutz- und Markierungselemente miteinander zu Blöcken verklebt und anschließend die Blöcke in der gewünschten Anordnung nebeneinander positioniert werden und die Vergussmasse in die Zwischenräume zwischen den Blöcken eingebracht wird.

In einer bevorzugten Weiterbildung weist die Verschleißschutzeinheit ein Trägerelement mit einem Aufnahmebereich sowie Befestigungselemente auf, wobei die Befestigungselemente dem Trägerelement auf einer, dem Aufnahmebereich gegenüberliegenden, Seite zugeordnet sind und wobei mittels der Befestigungselemente die Verschleißschutzeinheit an einer Unterstruktur anordenbar ist.

Die Unterstruktur wird in diesem Zusammenhang durch ein zu schützendes Objekt gebildet, auf welchem die Verschleißschutzeinheit einzeln oder innerhalb eines Verbundes mit weiteren Verschleißschutzeinheiten befestigt wird.

Die Befestigungselemente können vorliegend beispielsweise als Gewindebolzen ausgebildet sein, welche in entsprechende Aufnahmebohrungen der Unterstruktur eingeführt und in diesen durch Muttern gesichert werden. Als Befestigungselemente im Sinne der erfindungsgemäßen Lösung ist jedes Mittel zu verstehen, welches in der Lage ist, die Verschleißschutzeinheit an der Unterstruktur zu befestigen. Es ist auch möglich, dass das Trägerelement und die Befestigungselemente ein einheitliches Bauteil bilden.

Bei der hier aufgeführten Weiterbildung sind die Verschleißschutzelemente und die Markierungselemente in dem Aufnahmebereich angeordnet und mit dem Trägerelement durch die Verbindungsmittel verbunden.

In Kombination mit der Bereitstellung der Verbindungsmittel durch eine Vergussmasse kann, neben den Verschleißschutz- und den Markierungselementen, auch das Trägerelement ganz oder teilweise in die Vergussmasse eingebettet und zudem, insbesondere bei gitterartiger Ausbildung, von der Vergussmasse durchsetzt sein. Diese Variante bietet den besonderen Vorteil, dass ein besonders zuverlässiger Verbund vorliegt und zudem das Trägerelement auch an der der Unterstrukur zugewandten Seite vor korrosiven und chemischen Angriffen geschützt wird. Zudem kann je nach Elastizität der Vergussmasse die Verschleißschutzeinheit aufgrund des Vergussmassebereichs, der sich zwischen dem Trägerelement und der Unterstruktur befindet, Kräfte eines Impaktereignisses besser aufnehmen, verteilen und in die Unterstruktur ableiten.

Die vorliegende Weiterbildung der Verschleißschutzeinheit kombiniert auf besonders vorteilhafte Weise eine einfache Montierbarkeit mit den Vorteilen kleinsegmentierter Verschleißschutzvorrichtungen hinsichtlich deren Beschädigungs- und Ausfallverhaltens.

Insbesondere kann durch die Kleinsegmentierung die Wahrscheinlichkeit eines Bruchs eines Verschleißschutzelements bei einem Impaktereignis reduziert werden.

Ferner besteht der Vorteil, dass bei einer etwaigen Beschädigung eines Verschleißschutzelements die generelle Verschleißschutzfunktion der Verschleißschutzeinheit nur in einem vergleichsweise kleinen Bereich beeinträchtigt wird. Gleichzeitig kann mit nur einer Verschleißschutzeinheit eine relativ große Fläche abgedeckt werden, womit zusätzliche Montagevorteile bestehen.

Des Weiteren werden durch die bereits an der Verschleißschutzeinheit vorgesehenen Befestigungsmittel eine besonders einfache und mit einem geringen Zeitaufwand versehene Art der Montage an der jeweiligen Unterkonstuktion sowie eine unkomplizierte Auswechselbarkeit der Verschleißschutzeinheit ermöglicht.

Ein weiterer Vorteil der Verschleißschutzeinheit besteht vorliegend darin, dass diese vorgefertig werden kann und zudem, durch eine geeignete Anordnung der Verschleißschutzelemente und eine entsprechend geometrischen Ausbildung des Trägerelements, die Verschleißschutzeinheit an unterschiedliche Geometrien der zu schützenden Unterkonstuktion angepasst werden kann.

Die Erfindung wird nachfolgend in Ausführungsbeispielen anhand von
- Fig. 1: schematische Seitenansicht
- Fig. 2: geschnittene Seitenansicht
- Fig. 3: geschnittene Seitenansicht mit Trägerelement
- Fig. 4: geschnittene Seitenansicht mit übereinanderliegenden Verschleißschutzund Markierungselementen
näher erläutert.

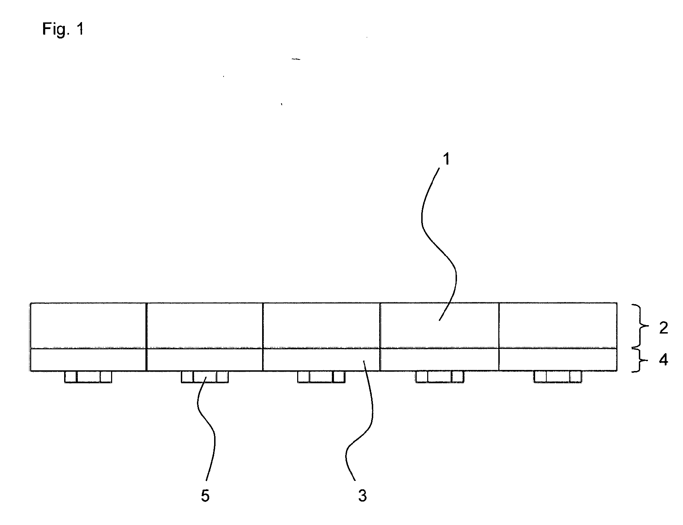

Fig. 1 zeigt ein Ausführungsbeispiel einer erfindungsgemäßen Verschleißschutzeinheit, welche eine Mehrzahl Verschleißschutzelemente 1 sowie eine Mehrzahl Markierungselemente 3 aufweist.

Die Verschleißschutzelemente 1 und die Markierungselemente 3 sind vorliegend jeweils nebeneinander und unmittelbar aneinandergrenzend angeordnet, wobei die Verschleißschutzelemente 1 eine Verschleißschutzebene 2 und die Markierungselemente 3 eine Markierungsebene 4 ausbilden.

Die Verschleißschutzelemente 1 und die Markierungselemente 3 sind zudem durch Verbindungsmittel 5 in einer Lagebeziehung zueinander festgelegt. Die Verbindungsmittel 5 werden im Ausführungsbeispiel gemäß Fig. 1 durch Schrauben gebildet, wobei jeweils ein Markierungselement 3 mit einem Verschleißschutzelement 1 durch ein Verbindungsmittel 5 verbunden ist.

Die in den Fig. 1 bis 3 dargestellte Verschleißschutzeinheit eignet sich insbesondere zur Bereitstellung eines Verschleißschutzes bei Trichtern oder Schurren von Förderanlagen, durch welche abrasiv wirkendes Material gefördert wird.

Die Verschleißschutzelemente 1 bestehen im Ausführungsbeispiel aus einem Keramikmaterial und bilden die Oberfläche einer zu schützenden Unterkonstruktion (nicht dargestellt), welche unmittelbar mit dem abrasiv wirkenden Material in Kontakt kommt.

Durch die Einwirkung des abrasiv wirkenden Materials kommt es über die Zeit zu einer Abnutzung der Verschleißschutzelemente 1 bis hin zu deren vollständigem strukturellen Versagen.

Tritt ein solcher Versagensfall ein, so führt der Aufbau der erfindungsgemäßen Verschleißschutzeinheit dazu, dass die farbigen Markierungselemente 3 sichtbar werden und so, beispielsweise im Rahmen einer optischen Kontrolle der Verschleißschutzeinheit, ein kritischer Abnutzungszustand signalisierbar, beziehungsweise erkennbar ist und rechtzeitig ein eventuell notwendig werdender Tausch der Verschleißschutzeinheit durchgeführt werden kann.

Gleichzeitig wird es durch die Mehrzahl der Verschleißschutzelemente 1 ermöglicht, dass bei einem Versagensfall eines einzelnen Verschleißschutzelements 1 nur ein vergleichsweise kleiner Bereich der Verschleißschutzeinheit betroffen ist und die Verschleißschutzfunktion in den übrigen Bereichen aufrecht erhalten werden kann.

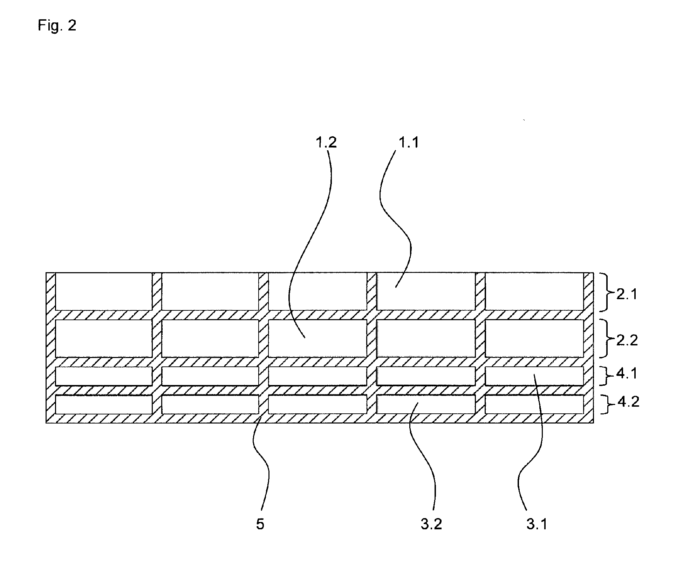

In Fig. 2 ist ein weiteres Ausführungsbeispiel einer erfindungsgemäßen Verschleißschutzeinheit dargestellt. In diesem Fall sind die Verschleißschutzelemente 1 derart angeordnet, dass diese zwei übereinanderliegende Verschleißschutzebenen 2.1 und 2.2 ausbilden.

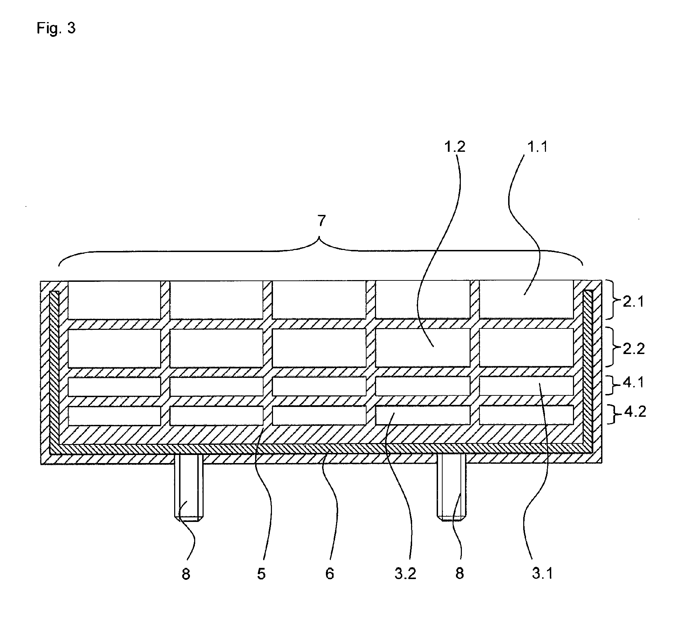

Des Weiteren sind die Markierungselemente 3 derart angeordnet, dass diese wiederum zwei übereinanderliegende Markierungsebenen 4.1 und 4.2 ausbilden. Die Verbindungsmittel 5 werden im Ausführungsbeispiel gemäß Fig. 2 und 3 durch eine Vergussmasse, vorliegend eine festeleastische Polyurethenvergussmasse, gebildet.

Die Vergussmasse wird nach einer erfolgten Vorpositionierung der Verschleißschutzelemente 1 und der Markierungselemente 3 in die, diese umgebenden Zwischenräume eingefüllt, wobei die Markierungselemente 3 sowie die Verschleißschutzelemente 1.2 der untenliegenden Verschleißschutzebene 2.2 vollständig von der Vergussmasse umschlossen werden.

Die Verschleißschutzelemente 1.1 der obenliegenden Verschleißschutzebene 2.1 werden nur an deren Unterseiten und Seitenflächen von der Vergussmasse umschlossen, sodass die Oberseiten der Verschleißschutzelemente 1.1 die Oberfläche bilden, welche mit dem abrasiv wirkenden Material in Kontakt kommt und welche die Verschleißschutzfunktion bereitstellt.

Im Falle einer entsprechenden Abnutzung der Verschleißschutzelemente 1.1 wird die Verschleißschutzfunktion von den Verschleißschutzelementen 1.2 übernommen.

Nach erfolgter Aushärtung der Vergussmasse steht vorliegend ein stabiler Verbund aus Verschleißschutz- und Markierungselementen 1, 4 bereit, welcher auf eine zu schützende Unterkonstruktion, beispielsweise durch verkleben, aufgebracht werden kann.

Die Markierungselemente 3 sind in den Ausführungsbeispielen nach Fig. 2 und 3 ebenfalls als Verschleißschutzelemente ausgebildet, sodass durch diese, bei einem entsprechenden Abnutzungszustand der Verschleißschutzelemente 1.2, ebenfalls eine Verschleißschutzfunktion übernommen werden kann.

Zudem kann durch eine, wie in Fig. 2 dargestellte, Anordnung der Markierungselemente 3 ein mehrstufiger Aufbau der Markierungsebenen 4 bereitgestellt werden, in welchem beispielsweise die Markierungselemente 3.1 der obenliegenden Markierungsebene 4.1 grün und die Markierungselemente 3.2 der untenliegenden Markierungsebene 4.2 rot eingefärbt sind.

Je nachdem welche Markierungselemente 4 bei einer optischen Kontrolle der Verschleißschutzeinheit erkennbar sind, kann so eine effektive Einschätzung des Abnutzungszustandes und der verbleibenden Restnutzungsdauer der Verschleißschutzeinheit vorgenommen werden.

Fig. 3 zeigt ein weiteres Ausführungsbeispiel einer erfindungsgemäßen Verschleißschutzeinheit, wobei diese vorliegend zusätzlich ein Trägerelement 6 mit einem Aufnahmebereich 7 sowie mit Befestigungselementen 8 aufweist.

Durch die Befestigungselemente 8, welche vorliegend als Gewindebolzen ausgebildet sind, wird eine besonders einfache Anordnung der Verschleißschutzeinheit an einer zu schützenden Unterkonstruktion (nicht dargestellt) ermöglicht.

Der Aufnahmebereich 7 dient vorliegend zu Aufnahme der Verschleißschutzelemente 1 und der Markierungselemente 3, welche im hier gezeigten Ausführungsbeispiel durch die, als Vergussmasse ausgebildeten, Verbindungsmittel 5 in einer Lagebeziehung zueinander festgelegt und mit dem Trägerelement 6 fest verbunden sind.

Zudem ist in dem hier dargestellten Ausführungsbeispiel das Trägerelement 6 ebenfalls in die Vergussmasse eingebettet, sodass als besonderer Vorteil eine formschlüssige Lagefestlegung des Trägerelemente 6 gegenüber den Verschleißschutzelementen 1 und den Markierungselementen 3 und so ein besonders stabiler Verbund aus Trägerelement 6 und den Verschleißschutzelementen 1 und den Markierungselementen 3 bereitgestellt wird.

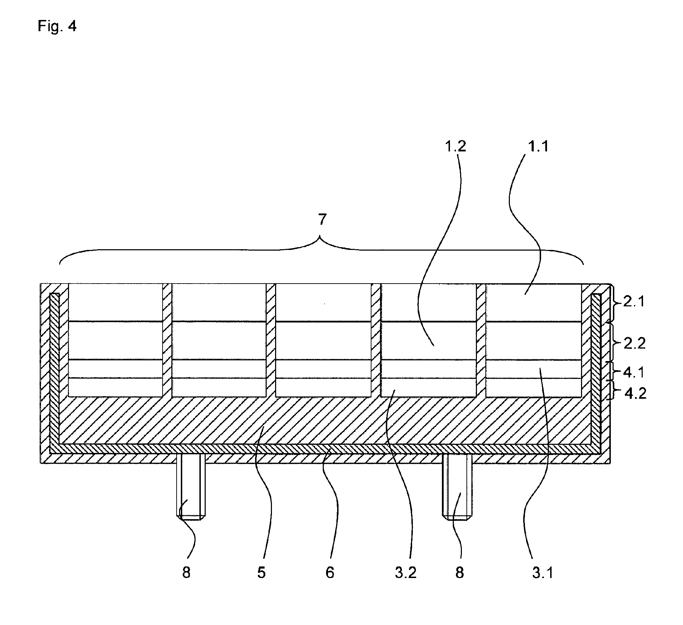

In Fig. 4 ist eine weitere Ausführungsform der Verschleißschutzeinheit, bei welcher übereinanderliegende Verschleißschutzelemente 1 und Markierungselemente 3 unmittelbar aufeinanderliegend angeordnet sind, dargestellt.

Eine solche Anordnung bietet insbesondere den Vorteil, dass bei einer Montage der Verschleißschutzeinheit übereinanderliegende Verschleißschutzelemente 1 und Markierungselemente 3 miteinander, beispielsweise durch verkleben, zu Blöcken verbunden werden und anschließend die Blöcke in der gewünschten Konfiguration nebeneinander angeordnet werden können. Die Vergussmasse kann danach in die Zwischenräume zwischen den Blöcken eingebracht werden, sodass die Blöcke an deren Unterseiten und Seitenflächen von der Vergussmasse umschlossen werden.

Hierdurch wird zum einen die Positionierung der Verschleißschutzelemente 1 und der Markierungselemente 3 vereinfacht und zum anderen, durch das Umschließen der Blöcke, ein stabiler Verbund innerhalb der Verschleißschutzeinheit bereitgestellt.

### Verwendete Bezugszeichen

- 1: Verschleißschutzelemente
- 2: Verschleißschutzebene
- 3: Markierungselemente
- 4: Markierungsebene
- 5: Verbindungsmittel
- 6: Trägerelement
- 7: Aufnahmebereich
- 8: Befestigungsmittel

## Patentansprüche

1. Verschleißschutzeinheit,
aufweisend eine Mehrzahl Verschleißschutzelemente (1), welche mindestens eine Verschleißschutzebene (2) ausbilden, und aufweisend eine Mehrzahl farbiger Markierungselemente (3), welche mindestens eine Markierungsebene (4) ausbilden, wobei die mindestens eine Markierungsebene (4) von mindestens einer Verschleißschutzebene (2) überdeckt wird, und aufweisend Verbindungsmittel (5), durch welche die Verschleißschutzelemente (1) und die Markierungselemente (3) in einer Lagebeziehung zueinander festgelegt sind.

2. Verschleißschutzeinheit nach Anspruch 1,
wobei die Markierungselemente (3) als Verschleißschutzelemente ausgebildet sind.

3. Verschleißschutzeinheit nach Anspruch 1 oder 2,
wobei die Verschleißschutzelemente (1) mehrere, übereinanderliegende Verschleißschutzebenen (2) ausbilden.

4. Verschleißschutzeinheit nach einem der vorhergehenden Ansprüche,
wobei die Markierungselemente (3) mehrere, übereinanderliegende Markierungsebenen (4) ausbilden.

5. Verschleißschutzeinheit nach einem der vorhergehenden Ansprüche,
wobei unterhalb der mindestens einen Markierungsebene (4) eine weitere Verschleißschutzebene (2) angeordnet ist.

6. Verschleißschutzeinheit nach einem der vorhergehenden Ansprüche,
wobei die Verbindungsmittel (5) durch eine Vergussmasse bereitgestellt werden.

7. Verschleißschutzeinheit nach einem der vorhergehenden Ansprüche,
wobei die Verschleißschutzeinheit ein Trägerelement (6) mit einem Aufnahmebereich (7) aufweist, und wobei die Verschleißschutzeinheit Befestigungselemente (8) aufweist, welche dem Trägerelement (6) auf einer, dem Aufnahmebereich (7) gegenüberliegenden, Seite zugeordnet sind und mittels derer die Verschleißschutzeinheit an einer Unterkonstuktion anordenbar ist, und wobei die Verschleißschutzelemente (1) und die Markierungselemente (3) in dem Aufnahmebereich (7) angeordnet sind, und wobei die Verschleißschutzelemente (1) und die Markierungselemente (3) durch die Verbindungsmittel (5) mit dem Trägerelement (6) verbunden sind.
